# EUROPEAN PATENT APPLICATION

(11) **EP 3 715 445 A1**
(43) Date of publication of application: **30.09.2020**
(21) Application number: 19166338.4
(22) Date of filing: 29.03.2019
(51) Int. Cl.: C11D 3/386

(54) **CELLULOLYTIC ENZYME COMPRISING LAUNDRY PRODUCT**

(71) Applicant: Clariant Produkte (Deutschland) GmbH, 81928 München (DE)
(72) Inventor: GLÜCK, Claudia, 82152 Planegg (DE); PFENNIG, Sabrina, 82205 Gilching (DE); GÖTZ, Katharina, 81379 München (DE); O'CONNELL, Timothy, 86899 Landsberg am Lech (DE)
(74) Representative: Graser, Konstanze

(57) **Abstract**

The present invention refers to a laundry product which is a laundry composition comprising a cellulolytic enzyme of SEQ ID NO.1 or a combination thereof in combination with an anionic surfactant, a non-ionic surfactant, a builder, a protease, a stabilizer, and a combination thereof, and optionally a soil release polymer. Moreover, the invention is directed to the use of the laundry composition for depilling.

## Description

The present invention refers to a laundry product which is a laundry composition comprising a cellulolytic enzyme of SEQ ID NO.1 or a combination thereof in combination with an anionic surfactant, a non-ionic surfactant, a builder, a protease, a stabilizer, and a combination thereof, and optionally a soil release polymer. Moreover, the invention is directed to the use of the laundry composition for depilling.

### Technical background

Cellulolytic enzymes such as cellulases are used for various applications and are of particular importance for the good performance of cleaning applications such as the performance of a laundry composition.

Cellulase is a highly efficient catalyst specially designed for the hydrolysis of cellulosic materials. Cellulose can be broken down into small molecules of cellulose, polysaccharide compounds and glucose. Cellulase existed very early in herbivorous animals, and scientists have been researching cellulase for over 100 years. Initially, cellulase was mainly used to degrade cellulose in the world's richest deposits in order to use it as a biological source of energy. During this process, numerous other applications of cellulase were discovered. Today, cellulase is widely used in textile processing, laundry application, paper making, animal feed, biological energy sources, food processing, brewing, environmental protection and oil production. During this process, cellulase has also been used to develop numerous species, such as cellulase or acid cellulose. There are now some cellulases that have good properties even under alkaline conditions. Cellulase is widely used in many industrial sectors and the present invention offers a novel cellulase for laundry application.

There are various cellulolytic enzymes such as cellulases known within the art, however, functional requirements are constantly increasing as customers expect high cleaning performance while production costs and thus, costs of the final product should be kept low. In addition, environmental aspects gain importance and requirements for marketing approval constantly increase. So far, whiteness of fabrics is often achieved by implementation of bleaching agents such as chlorine-containing compositions. This leads not only to damages of the fabrics, but is also increasing costs and is environmentally harmful. Such state of the art enzymes is for example disclosed in US 2005 070003 A1.

It is important that the cellulolytic enzyme is embedded in an environment providing optimal conditions for the enzyme and interactions with the enzyme, respectively, to reach high efficiency of a laundry composition comprising such cellulolytic enzyme.

The inventors of the present invention have therefore set themselves the task to develop a novel laundry composition comprising a combination of a cellulolytic enzyme and further compounds, which shows significantly improved properties in view of the laundry compositions known in the art. For example it has been of particular importance to the inventors of the present invention to significantly improve depilling and stability of the laundry composition.

### Summary of the invention

The present invention is directed to a laundry composition comprising a cellulolytic enzyme comprising an amino acid sequence of SEQ ID NO.1, an anionic surfactant selected from the group consisting of an alcohol ether sulfate, a soap and a combination thereof, a non-ionic surfactant, a builder such as a complexing agent, and a detergent selected from the group consisting of a protease, a stabilizer and a combination thereof, and optionally a soil release polymer.

Alternatively or in addition, the laundry composition comprises for example a cellulolytic enzyme comprising for example an amino acid sequence having at least 70 to 99 %, 75 to 98%, 80 to 95 %, 85 to 93 %, or 90 % homology with SEQ ID NO.1.

The cellulolytic enzyme is for example encoded by a nucleic acid sequence of SEQ ID NO. 2 or a mutated form thereof, wherein the sequence of SEQ ID NO.2 comprises one or more mutations selected from the group consisting of missense mutation, nonsense mutation, insertion, deletion, duplication, frameshift mutation and repeat expansion. A mutated form of the nucleic acid sequence of SEQ ID NO.2 encodes for example an amino acid sequence having at least 70 to 99 %, 75 to 98%, 80 to 95 %, 85 to 93 %, or 90 % homology with SEQ ID NO.1.

The soil release polymer contains for example at least one hydrophobic monomer and at least one hydrophilic monomer and is for example selected from the group consisting of an acrylic polymer, a fluoro polymer, a terephthalate-based polymer and a combination thereof. The soil release polymer is present in the laundry composition for example in an amount of 0.1 to 10 %, 0.3 to 8 %, 0.5 to 6 %, 0.8 to 4, or 1 % by weight of the total composition.

The alcohol ether sulfate is present in the laundry composition for example in an amount of 1 to 30 %, 2 to 28 %, 3 to 25 %, 5 to 23 %, 7 to 20 %, 9 to 18 %, 12 to 15 %, or 10 % or 20 % by weight of the total composition.

The soap is present in the laundry composition for example in an amount of 1 to 15 %, 3 to 12 %, 7 to 10 %, or 2 % or 5 % by weight of the total composition.

The non-ionic surfactant is present in the laundry composition for example in an amount of 1 to 15 %, 3 to 12 %, 7 to 10 %, or 2 % or 5 % by weight of the total composition.

The builder is present in the laundry composition for example in an amount of 1 to 15 %, 3 to 12 %, 7 to 10 %, or 2 % by weight of the total composition.

The protease is present in the laundry composition for example in an amount of 0.05 to 5 %, 0.1 to 3 %, 0.3 to 2 %, 0.2 to 1, or 0.2% or 1 % by weight of the total composition.

The stabilizer is present in the laundry composition for example in an amount of 0.0001 to 10 %, or 0.0001 to 1 % by weight of the total composition.

The laundry composition of the present invention has for example a stability at a temperature of 10 to 90 °C, 20 to 60 °C, 23 to 50 °C, 24 to 45 °C, 25 to 40 °C, 26 to 35 °C, 28 to 32 °C or 30 °C, 40 °C, 60 °C or 90 °C. The laundry composition is for example used for depilling.

All documents cited or referenced herein ("herein cited documents"), and all documents cited or referenced in herein cited documents, together with any manufacturer's instructions, descriptions, product specifications, and product sheets for any products mentioned herein or in any document incorporated by reference herein, are hereby incorporated herein by reference, and may be employed in the practice of the invention. More specifically, all referenced documents are incorporated by reference to the same extent as if each individual document was specifically and individually indicated to be incorporated by reference.

### Description of the figures

The following figures show the present invention in more detail. However, the present invention is not limited to the disclosure depicted in the figures.
Fig. 1 shows the depilling effect of laundry compositions of the present invention compared to compositions of the prior art (e.g., Celluclean® 5000L).
Fig. 2 depicts the stability of the laundry composition of the present invention, in particular of the cellulolytic enzyme after for weeks at 30 °C.

### Detailed description

The present invention refers to a laundry composition comprising or consisting of a cellulolytic enzyme comprising or consisting of an amino acid sequence of SEQ ID NO.1, an anionic surfactant, a non-ionic surfactant, a builder, a detergent, and optionally a soil release polymer. The anionic surfactant is for example selected from the group consisting of carboxylates, sulphonates, petroleum sulphonates, alkylbenzyl sulphonates, naphthalene sulphonates, olefin sulphonates, alkyl sulfonates, sulphates, sulphated natural oils and fats, respectively, sulphated esters, sulphated alkanolamides, ethoxlated, sulphated alkylphenols, and combinations thereof, for example an alcohol ether sulfate, a soap and a combination thereof. The anionic surfactant is for example further selected from the group consisting of sodium and/or potassium alkyl sulphates, e.g., those obtained by sulphating higher C8 to C18 alcohols, produced for example from tallow or coconut oil, alkyl ether carboxylic acids; sodium and potassium alkyl C9 to C20 benzene sulphonates, e.g., sodium linear secondary alkyl C10 to C15 benzene sulphonates; and sodium alkyl glyceryl ether sulphates, e.g., those ethers of the higher alcohols derived from tallow or coconut oil and synthetic alcohols derived from petroleum and is for example selected from linear alkyl benzene sulphonate; alkyl sulphates; alkyl ether sulphates; alkyl ether carboxylates; soaps; alkyl (e.g., methyl) ester sulphonates, and mixtures thereof. For example alkyl ether sulphates such as C12 to C14 n-alkyl ether sulphates with an average of 1 to 3 EO (ethoxylate) units or sodium lauryl ether sulphate (SLES). The linear alkyl benzene sulphonate is for example a sodium C11 to C15 alkyl benzene sulphonates. The alkyl sulphates is for example a linear or branched sodium C12 to C18 alkyl sulphates. An example is sodium dodecyl (SDS, also known as primary alkyl sulphate).

The non-ionic surfactant is for example selected from the group consisting of ethoxylated aliphatic alcohol, polyoxyethylene surfactants, carboxylic esters, polyethylene glycol esters, glycoside, anhydrosorbitol esters and ethoxylated derivatives, glycol esters of fatty acids, carboxylic amides, monoalkanolamine condensates, and combinations thereof. The builder is for example a complexing agent such as EDTA (ethylenediaminetetraacetic acid), NTA (nitrilotriacetic acid), DTPA (diethylene-triaminepentaacetic acid), alkyl-or alkynylsuccinic acid, nitrilotriacetic acid or a combination thereof.

Another surfactant is for example a quaternary ammonium or a quaternary surfactant for example such as acyclic including linear alkyl, branched alkyl, hydroxyalkyl, oleylalkyl, acyloxyalkyl, diamidoamine, or diester quaternary ammonium compounds (cationic detergent) or for example CHAPS (zwitterionic detergent).
In the context of the present invention, the term "protease" is understood to mean one or more enzymes or enzyme compositions from the enzyme class 3.4 (peptide hydrolases). This includes the terms peptidases and or proteinases. Proteases catalyze the hydrolysis of peptide bonds. The enzymes may be of animal origin, e.g. from gastric mucosa, of vegetable origin or of microbial origin, e.g. from yeast, fungi, algae or bacteria. In particular, it may for example be one or more enzymes of the following protease enzyme classes: aminopeptidases, aspartate endopeptidases, dipeptidases, dipeptidyl peptidases, tripeptidyl peptidases, peptidyl dipeptidases, serine carboxypeptidase metallo carboxypeptidases, cysteine carboxypeptidases, omega peptidases, serine endopeptidases, cysteine endopeptidases, asparagine endopeptidases, metallo endopeptidases, threonine endopeptidases, particular preference being given to metallo endopeptidases and serine endopeptidases.

The stabilizer, which is for example a protease inhibitor, is for example selected from the group consisting of benzamidine hydrochloride, lower aliphatic alcohols or carboxylic acids, mixtures of a polyol and a boron compound, boronic acid, boronic acid derivative such as aryl boronic acids, acetamidophenyl boronic acid, 2-formyl phenyl boronic acid, 3-formyl phenyl boronic acid, 4-formyl phenyl boronic acid, thionaphtrene boronic acid, 1,3,5 trimethylphenyl boronic acid, 3-chloro-4-flourophenyl boronic acid, 3-aminophenyl boronic acid, 3,5-bis-(triflouromethyl) phenyl boronic acid, 2,4 dichlorophenyl boronic acid, 4-methoxyphenyl boronic acid, aromatic borate esters, peptide boronic acids, peptide aldehydes derivatives, proteins, peptides and peptide derivatives, such as peptide aldehydes and peptide trifluromethyl ketones, optically active alpha amino aldehydes or β-keto carbonyl-, β-keto amide-, β-keto aldehyde derivatives. The stabilizer is present in the laundry composition for example in an amount of 0.0001 to 10 %, 0.001 to 0.02 %, 0.01 to 0.05 %, 0.003 to 0.3 %, 0.005 to 0.5 %, 0.1 to 0.2 %, 0.3 to 3 %, 0.4 to 8 %, 0.5 to 6 %, 0.8 to 4, or 0.001 %, 0.003 %, 0.005 %, 0.01 %, 0.03 %, 0.05 %, 0.1 %, 0.3 %, 0.5 % or 1 % by weight of the total composition, wherein amount for example depends on the constant of the stabilizer.

Each of the examples of the compounds of the different categories such as the examples of the anionic surfactant, the non-ionic surfactant, the builder, the protease, the stabilizer, optionally the soil release polymer, a perfume or a fluorescent agent of the present invention can be combined with each other in the indicated amounts.

For example the laundry composition comprises or consists of a cellulolytic enzyme comprising an amino acid sequence of SEQ ID NO.1, an anionic surfactant selected from the group consisting of carboxylates, sulphonates, petroleum sulphonates, alkylbenzyl sulphonates, naphthalene sulphonates, olefin sulphonates, alkyl sulfonates, sulphates, sulphated natural oils and fats, respectively, sulphated esters, sulphated alkanolamides, ethoxlated, sulphated alkylphenols, and combinations thereof, for example an alcohol ether sulfate, a soap and a combination thereof, sodium and/or potassium alkyl sulphates, e.g., those obtained by sulphating higher C8 to C18 alcohols, produced for example from tallow or coconut oil, alkyl ether carboxylic acids; sodium and potassium alkyl C9 to C20 benzene sulphonates, e.g., sodium linear secondary alkyl C10 to C15 benzene sulphonates; and sodium alkyl glyceryl ether sulphates, e.g., those ethers of the higher alcohols derived from tallow or coconut oil and synthetic alcohols derived from petroleum and is for example selected from linear alkyl benzene sulphonate, alkyl sulphates, alkyl ether sulphates, alkyl ether carboxylates; soaps; alkyl (e.g., methyl) ester sulphonates, and mixtures thereof, alkyl ether sulphates such as C12 to C14 n-alkyl ether sulphates with an average of 1 to 3 EO (ethoxylate) units, or sodium lauryl ether sulphate (SLES). The linear alkyl benzene sulphonate is for example a sodium C11 to C15 alkyl benzene sulphonates, a linear or branched sodium C12 to C18 alkyl sulphates, sodium dodecyl; a non-ionic surfactant such as ethoxylated aliphatic alcohol, polyoxyethylene surfactants, carboxylic esters, polyethylene glycol esters, glycoside, anhydrosorbitol esters and ethoxylated derivatives, glycol esters of fatty acids, carboxylic amides, monoalkanolamine condensates, and combinations thereof.; a builder such as a complexing agent, e.g., EDTA (ethylenediaminetetraacetic acid), NTA (nitrilotriacetic acid), DTPA (diethylene-triaminepentaacetic acid), alkyl-or alkynylsuccinic acid, nitrilotriacetic acid or a combination thereof; a protease such as enzymes or enzyme compositions from the enzyme class 3.4, e.g., aminopeptidases, aspartate endopeptidases, dipeptidases, dipeptidyl peptidases, tripeptidyl peptidases, peptidyl dipeptidases, serine carboxypeptidase metallo carboxypeptidases, cysteine carboxypeptidases, omega peptidases, serine endopeptidases, cysteine endopeptidases, asparagine endopeptidases, metallo endopeptidases, threonine endopeptidases, particular preference being given to metallo endopeptidases and serine endopeptidases; a stabilizer such as benzamidine hydrochloride, lower aliphatic alcohols or carboxylic acids, mixtures of a polyol and a boron compound, boronic acid, boronic acid derivative such as aryl boronic acids, acetamidophenyl boronic acid, 2-formyl phenyl boronic acid, 3-formyl phenyl boronic acid, 4-formyl phenyl boronic acid, thionaphtrene boronic acid, 1,3,5 trimethylphenyl boronic acid, 3-chloro-4-flourophenyl boronic acid, 3-aminophenyl boronic acid, 3,5-bis-(triflouromethyl) phenyl boronic acid, 2,4 dichlorophenyl boronic acid, 4-methoxyphenyl boronic acid, aromatic borate esters, peptide boronic acids, peptide aldehydes derivatives, proteins, peptides and peptide derivatives, such as peptide aldehydes and peptide trifluromethyl ketones, optically active alpha amino aldehydes or β-keto carbonyl-, β-keto amide-, β-keto aldehyde derivatives and a combination thereof, and optionally a soil release polymer such as at least one hydrophobic monomer, at least one hydrophilic monomer or a combination thereof, e.g., selected from the group consisting of an acrylic polymer, a fluoro polymer, a terephthalate based polymer and a combination thereof.

The alcohol ether sulfate is for example present in an amount of 1 to 30 %, 2 to 28 %, 3 to 25 %, 5 to 23 %, 7 to 20 %, 9 to 18 %, 12 to 15 %, or 10 % or 20 % by weight of the total composition, the soap is for example present in an amount of 1 to 15 %, 3 to 12 %, 7 to 10 %, or 2 % or 5 % by weight of the total composition, the non-ionic surfactant is for example present in an amount of 1 to 15 %, 3 to 12 %, 7 to 10 %, or 2 % or 5 % by weight of the total composition, the builder is for example present in an amount of 1 to 15 %, 3 to 12 %, 7 to 10 %, or 2 % by weight of the total composition, the soil release polymer is for example present in an amount of 0.1 to 10 %, 0.3 to 8 %, 0.5 to 6 %, 0.8 to 4, or 1 % by weight of the total composition, the protease is for example present in an amount of 0.05 to 5 %, 0.1 to 3 %, 0.3 to 2 %, 0.2 to 1, or 0.2% or 1 % by weight of the total composition, the stabilizer is for example present in an amount of 0.0001 to 10 % or 1 % by weight of the total composition, and the cellulolytic enzyme comprises for example an amino acid sequence having at least 70 to 99 %, 75 to 98%, 80 to 95 %, 85 to 93 %, or 90 % homology with SEQ ID NO.1.

In the following, the elements of the present invention will be described in more detail. These elements are listed with specific embodiments, however, it should be understood that they may be combined in any manner and in any number to create additional embodiments. The variously described examples and embodiments should not be construed to limit the present invention to only the explicitly described embodiments. This description should be understood to support and encompass embodiments which combine the explicitly described embodiments with any number of the disclosed elements. Furthermore, any permutations and combinations of all described elements in this application should be considered disclosed by the description of the present application unless the context indicates otherwise.

Throughout this specification and the claims, unless the context requires otherwise, the word "comprise", and variations such as "comprises" and "comprising", will be understood to imply the inclusion of a stated member, integer or step or group of members, integers or steps but not the exclusion of any other member, integer or step or group of members, integers or steps. The terms "a" and "an" and "the" and similar reference used in the context of describing the invention (especially in the context of the claims) are to be construed to cover both the singular and the plural, unless otherwise indicated herein or clearly contradicted by the context. Recitation of ranges of values herein is merely intended to serve as a shorthand method of referring individually to each separate value falling within the range. Unless otherwise indicated herein, each individual value is incorporated into the specification as if it were individually recited herein. All methods described herein can be performed in any suitable order unless otherwise indicated herein or otherwise clearly contradicted by context. The use of any and all examples, or exemplary language (e.g., "such as", "for example"), provided herein is intended merely to better illustrate the invention and does not pose a limitation on the scope of the invention otherwise claimed. No language in the specification should be construed as indicating any non-claimed element essential to the practice of the invention.

The laundry composition of the present invention shows an outstanding depilling effect and high stability.

In addition, the inventive laundry composition shows excellent whiteness (ARD) and depilling effects in a broad temperature range of 10 to 90 °C, 20 to 60 °C, 23 to 50 °C, 24 to 45 °C, 25 to 40 °C, and even at low temperatures such as temperatures of 25 to 35 °C, 28 to 32 °C or 30 °C.

A further advantage of the laundry composition comprising a cellulolytic enzyme is a high expression rate of the cellulolytic enzyme further decreasing production costs.

Within the present invention, the term "cellulolytic enzyme" is to be understood as referring to any enzyme catalyzing cellulolysis, which is the decomposition of cellulose and related polysaccharides. Within the present invention, the term "cellulolytic enzyme" refers to any naturally occurring mixture or complex of such enzymes, which act serially or synergistically to decompose cellulosic material. The cellulolytic enzyme of the present invention may be of fungal, bacterial or protozoal origin. The term "cellulolytic enzyme" refers in particular to any enzyme capable of breaking down cellulose into monosaccharides such as beta-glucose, or shorter polysaccharides and oligosaccharides. An example of a cellulolytic enzyme is a cellulase.

The term "depilling" refers to the ability of a cellulolytic enzyme to remove cotton fuzz and loose surface fibers in or on the fabric. Treatment with a cellulolytic enzyme additionally aids in the prevention of subsequent formation of fiber pills that make the garments appear worn. Moreover, the brightness of the colors can be refreshed by means of cellulases. During depilling it is desirable to minimize strength loss of the fabric due to the hydrolytic action of the cellulolytic enzyme.

The laundry composition of the present invention optionally comprises a perfume, which for example comprises at least one note (compound) from: alpha-isomethyl ionone, benzyl salicylate; citronellol; coumarin; hexyl cinnamal; linalool; Pentanoic acid, 2-methyl-, ethyl ester; octanal; benzyl acetate; 1,6-octadien-3-ol, 3,7-dimethyl-, 3-acetate; cyclohexanol, 2-(1,1-dimethylethyl)-, 1-acetate; delta-damascone; beta-ionone; verdyl acetate; dodecanal; hexyl cinnamic aldehyde; cyclopentadecanolide; benzeneacetic acid, 2-phenylethyl ester;amyl salicylate; beta-caryophyllene; ethyl undecylenate; geranyl anthranilate; alpha-irone; beta-phenyl ethyl benzoate; alpa-santalol; cedrol; cedryl acetate; cedry formate; cyclohexyl salicyate; gamma-dodecalactone; and, beta phenylethyl phenyl acetate or a combination thereof.

Moreover, the laundry composition of the present invention optionally comprises a fluorescent agent (optical brightener). Fluorescent agents are well known and many such fluorescent agents are available commercially. Usually, these fluorescent agents are supplied and used in the form of their alkali metal salts, for example, the sodium salts. Classes of fluorescers are for example: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Fluorescers are for example: sodium 2 (4-styryl-3-sulphophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulophonate, disodium 4,4'-bis{[(4-anilino-6-morpholino-1,3,5-triazin-2-yl)]amino} stilbene-2-2' disulphonate, and disodium 4,4'-bis(2-sulphostyryl)biphenyl.

The total amount of the fluorescent agent or agents used in the composition is for example from 0.0001 to 0.5 wt.%, from 0.005 to 2 wt.%, or from 0.05 to 0.25 wt.% The laundry composition of the present invention comprises for example at least one further enzyme. If present, then the level of each enzyme in the laundry composition of the invention is for example from 0.0001 wt.% to 0.1 wt.%, or from 0.005 wt.% to 0.1 wt.%. Further enzymes are for example selected from the group consisting of proteases, alpha-amylases, other cellulases (different from the cellulolytic enzyme of the laundry composition of the present invention), lipases, peroxidases/oxidases, pectate lyases, mannanases or mixtures thereof.

In addition, the laundry composition of the present invention optionally comprises one or more polymers. Example of these polymers are polyethyleneimine, poly(vinylpyrrolidone), poly(vinylpyridine-N-oxide), poly(vinylimidazole), carboxymethylcellulose, poly(ethylene glycol), poly(vinyl alcohol), polycarboxylates such as polyacrylates, maleic/acrylic acid copolymers and lauryl methacrylate/acrylic acid copolymers.

The laundry composition of the present invention optionally further comprises additives such as solvents, solubilizers, fragrances, fragrance vehicles, dyestuffs, foam inhibitors, silicone oils, anti-redeposition agents, graying inhibitors, shrinkage preventers, anti-wrinkle agents, dye transfer inhibitors, antimicrobial active ingredients, germicides, fungicides, antioxidants, corrosion inhibitors, antistatics, ironing aids, phobizing and impregnating agents, swelling and nonslip agents, water and UV absorbers as long as the additives are not detrimental to the stability of the enzyme and to the delivery of the enzyme during the washing process.

The present invention also pertains to a method of laundering white fabric, the method comprising contacting the fabric with an aqueous solution comprising or consisting of a laundry composition of the present invention. Contacting of the fabric with the aqueous solution occurs for example at 10 to 90 °C, 20 to 60 °C, 23 to 50 °C, 24 to 45 °C, 25 to 40 °C, 26 to 35 °C, 28 to 32 °C or 30 °C, 40 °C, 60 °C or 90 °C.

As described herein, the laundry composition of the invention is stable at high temperatures, but also shows good activity at lower temperatures. Lower temperature washes are for example more environmentally friendly, less expensive and, typically, less likely to damage fabrics and trims.

The laundry composition of the present invention shows an unexpected high depilling effect and stability which is surprisingly superior compared to laundry compositions of the prior art.

### Examples

The following examples and references to figures describe the present invention in more detail. The examples and figures are for illustrative purposes only and are not to be understood as limiting the invention.

### Example 1: High depilling efficiency

The depilling effect of laundry compositions comprising a cellulase of the prior art such as "Celluclean® 5000L" (Novozymes A/S, Bagsværd Denmark) were tested in comparison to a laundry composition of the present invention. The following Table 1 presents the compounds of the laundry compositions and their amounts in the composition, wherein the cellulolytic enzyme comprised by the laundry composition is "Celluclean" or a cellulolytic enzyme of SEQ ID NO.1 or 2 according to the present invention. Cellulolytic enzymes were added in a dosage of 120 mg protein per kg laundry composition. The protein content was determined using a 2-D quant kit (GE Healthcare) according to supplier's manual. Bovine serum albumin was used as standard for quantification.

| **Function** | **Type** | **Name, e.g.,** | **6** | **7** | **8** | **14** | **15** | **16** |
|---|---|---|---|---|---|---|---|---|
| | **Alcohol ether sulfate** | Genapol LRO paste (Clariant) | 10% | 10% | 10% | 20% | 20% | 20% |
| | **Soap** | Edenor PK 12-18 GA (Emery) | 2% | 2% | 2% | 5% | 5% | 5% |
| **Non-ionic surfactant** | **Alcohol ethoxylate (AEO)** | Genapol LA 070 (Clariant) | 2% | 2% | 2% | 5% | 5% | 5% |
| **Builder** | **Complexing agent** | Sodium citrate | | 2% | 2% | | 2% | 2% |
| **Further Detergent Ingredients** | **Soil release polymer** | TexCare SRN260 (Clariant) | | | 1% | | | 1% |
| | **Protease** | Progress Uno (Novozymes) | 0.2% | 0.2% | 0.2% | 1% | 1% | 1% |
| | **Stabilizer** | Sodiumtetraborate | 1% | 1% | 1% | 1% | 1% | 1% |

The depilling effect of the laundry compositions was tested at 40 °C using a prepilled, printed jersey pilling monitor (E-253, 94 % cotton/6 % Dorlastan, Swissatest Testmaterialien AG, St. Gallen, Switzerland) representing used cotton textiles. The E-253 monitors were cut into swatches (approx. 4.4 cm x 15 cm) containing stripes of each color (black, red, green, blue).

Cellulase treatments were performed in an Atlas LP-2 Launder-O-meter (SDS Atlas, Rock Hill, SC 29732, USA) as follows. The Launder-O-meter was first pre-heated to 40°C. The washing liquor was prepared using 4 g/L laundry composition in synthetic tap water with defined German hardness of 14°, Ca:Mg 5:1. Subsequently, 32 g of steel balls (diameter 0.6 cm) and three swatches of E-253 were placed in the 1.2 L steel containers of the Launder-O-meter. Additionally, ten swatches of cotton cretonne (10 x 8 cm, CN-11, Center for Testmaterials B.V. 3133 KT Vlaardingen, The Netherlands). Afterwards, 500 ml of wash liquor were added into the 1.2 L containers and the Launder-O-meter was run at 40°C for 400 min. For each laundry composition a control sample without cellulolytic enzyme was accomplished. After the cellulase treatment in the Launder-O-meter, the swatches were first washed out in 1.5 L tap water and then rinsed separately under running water.

The L*a*b* values of the E-253 swatches were recorded after drying the textile over night at air using a spectrophotometer with D65, 10° (ColorFlex EZ, Hunterlab, Murnau am Staffelsee, Germany). The instrument was calibrated prior to the measurement with supplied white and black standards. Decrease of lightness (L*), i.e. increase of darkness compared to treatment without cellulase, was used as an indication of cellulase effect. When the surface fibers and fibrils protruding from the yarn forming pills and giving the fabric a greyish look are removed by cellulase, the lightness of the fabric decreases, and the surface of the fabric appears darker and colors get brighter (e.g., WO 2016 066896). The dL value was calculated by subtraction of L* of untreated swatches (arithmetic mean of 10 swatches) from L* of swatches treated with cellulase (arithmetic mean of 3 swatches). Therefore, positive dL values imply an increase of darkness, which indicates the removal of fibers and fibrils protruding from the yarn forming pills, giving the fabric a greyish look. The spectrophotometrical results were also confirmed by visual evaluation.

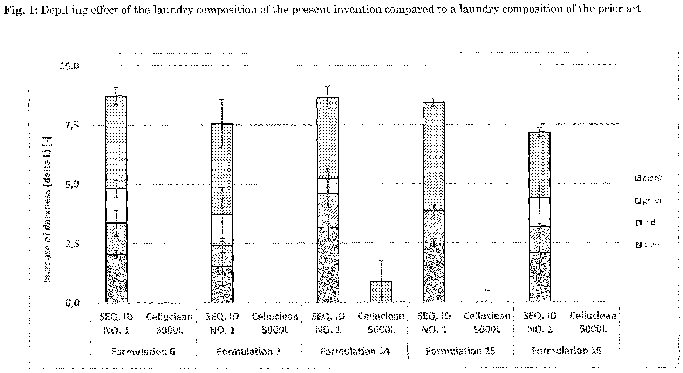

Fig. 1 shows a significantly increase of the depilling effect using the laundry composition of the present invention compared to a laundry composition comprising "Celluclean® 5000L".

### Example 2: Stability of the cellulolytic enzyme in a laundry composition

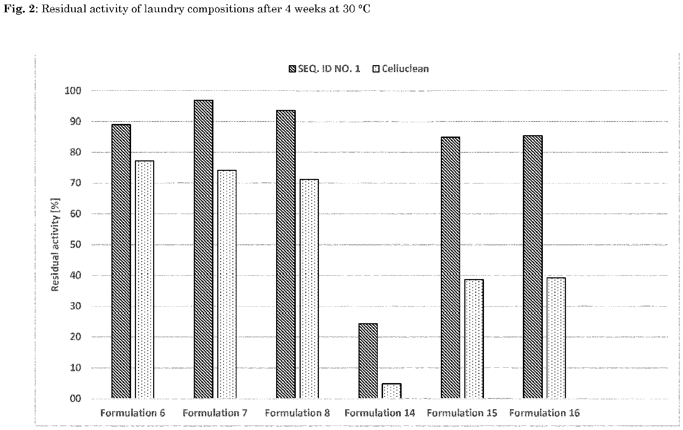

The residual activity of the laundry compositions described in Example 1 and depicted in Table 1 was tested after four weeks at 30 °C. The residual activity of the laundry composition of the present invention is significantly higher than of the laundry composition comprising a cellulase of the prior art, i.e., "Celluclean® 5000L (Novozymes A/S, Bagsværd Denmark). The results are shown in Fig. 2.

For testing the stability of the cellulolytic enzyme in the laundry compositions, the respective compositions were stored at 30 °C and the cellulolytic activity was measured before and at different time points during storage. The CellG5 assay kit (Megazyme u.c., Wicklow, Ireland) was used for activity determination. The CellG5 assay reagent contains two components: 4,6-O-(3-Ketobutylidene)-4-nitrophenyl-β-D-cellopentaoside as a substrate and a thermostable β-glucosidase.

In detail, 0.4 g of the respective laundry composition was weighed, diluted with 3.6 mL assay buffer (200 mM sodium phosphate buffer, pH 7.5) and stored on ice until measurement. For the measurement the samples were further diluted in assay buffer to ensure a measurement in the linear assay range. Diluted sample and substrate solution were pre-incubated at 37 °C. For the reaction, 60 µl diluted sample were mixed with 60 µL substrate solution and incubated at 37 °C. Absorbance was measured over time at a wavelength of 405 nm. The volumetric activity was calculated using p-Nitrophenol standards. Residual activity was calculated by division the volumetric activity at the respective time point by the volumetric activity before storage. The results after 4 weeks of storage are shown in **Fig. 2****.**

The results of Example 1 and 2 are summarized in the following Table2:

| | | **Darkness increase over all fabrics (sum delta L)** | | **Residual activity (4 weeks at 30 °C)** | |
|---|---|---|---|---|---|
| 10% AEOS 2% Soap, 2% AEO | Formulation 6 | 8.7 | ± 4.1 | 89.1 % | ± 8.0 |
| 10% AEOS 2% Soap, 2% AEO 2% builder | Formulation 7 | 7.5 | ± 4.1 | 96.9 % | ± 9.5 |
| 10% AEOS 2% Soap, 2% AEO 2% builder 1% soil release polymer | Formulation 8 | 8.9 | ± 3.6 | 93.5 % | ± 9.1 |
| 20% AEOS 5% Soap, 5% AEO | Formulation 14 | 8.6 | ± 3.4 | 24.3 % | ± 2.1 |
| 20% AEOS 5% Soap, 5% AEO 2% builder | Formulation 15 | 7.7 | ± 3.8 | 84.9 % | ± 8.1 |
| 20% AEOS 5% Soap, 5% AEO 2% builder 1% soil release polymer | Formulation 16 | 7.2 | ± 3.7 | 85.4 % | ± 8.1 |

### Sequence listing

SEQ ID NO: 1 (originates from *Chaetomium thermophilum var. thermophilum* DSM 1495), protein
SEQ ID NO:2 (DNA of SEQ ID NO: 1)

## Claims

1. Laundry composition comprising a cellulolytic enzyme comprising an amino acid sequence of SEQ ID NO.1, an anionic surfactant selected from the group consisting of an alcohol ether sulfate, a soap and a combination thereof, a non-ionic surfactant, a builder such as a complexing agent, and a protease, a stabilizer and a combination thereof, and optionally a soil release polymer.

2. Laundry composition according to claim 1, wherein the soil release polymer is selected from the group consisting of an acrylic polymer, a fluoro polymer, a terephthalate-based polymer and a combination thereof.

3. Laundry composition according to claim 1 or 2, wherein the alcohol ether sulfate is present in an amount of 1 to 30 %, 2 to 28 %, 3 to 25 %, 5 to 23 %, 7 to 20 %, 9 to 18 %, 12 to 15 %, or 10 % or 20 % by weight of the total composition.

4. Laundry composition according to any one of claims 1 to 3, wherein the soap is present in an amount of 1 to 15 %, 3 to 12 %, 7 to 10 %, or 2 % or 5 % by weight of the total composition.

5. Laundry composition according to any one of claims 1 to 4, wherein the non-ionic surfactant is present in an amount of 1 to 15 %, 3 to 12 %, 7 to 10 %, or 2 % or 5 % by weight of the total composition.

6. Laundry composition according to any one of claims 1 to 5, wherein the builder is present in an amount of 1 to 15 %, 3 to 12 %, 7 to 10 %, or 2 % by weight of the total composition.

7. Laundry composition according to any one of claims 1 to 6, wherein the soil release polymer is present in an amount of 0.1 to 10 %, 0.3 to 8 %, 0.5 to 6 %, 0.8 to 4, or 1 % by weight of the total composition.

8. Laundry composition according to any one of claims 1 to 7, wherein the protease is present in an amount of 0.05 to 5 %, 0.1 to 3 %, 0.3 to 2 %, 0.2 to 1, or 0.2% or 1 % by weight of the total composition.

9. Laundry composition according to any one of claims 1 to 8, wherein the stabilizer is present in an amount of 0.0001 to 10 % or 1 % by weight of the total composition.

10. Laundry composition according to claim 1, wherein the cellulolytic enzyme comprises an amino acid sequence having at least 70 to 99 %, 75 to 98%, 80 to 95 %, 85 to 93 %, or 90 % homology with SEQ ID NO.1.

11. Laundry composition according to claim 10, wherein the cellulolytic enzyme is encoded by a nucleic acid sequence of SEQ ID NO. 2 comprising one or more mutations selected from the group consisting of missense mutation, nonsense mutation, insertion, deletion, duplication, frameshift mutation and repeat expansion.

12. Laundry composition according to any one of claims 1 to 11 having stability at a temperature of 20 to 60 °C.

13. Use of a laundry composition according to any one of claims 1 to 12 for depilling.
